# EUROPEAN PATENT SPECIFICATION

(11) **EP 4 260 134 B1**
(45) Date of publication and mention of the grant of the patent: **17.04.2024**
(21) Application number: 21840735.1
(22) Date of filing: 03.12.2021
(51) Int. Cl.: G02C 7/10, G02F 1/1362, G02F 1/29, G02C 7/08

(54) **ELECTRODE DRIVING SCHEMES FOR TUNABLE LENS SYSTEMS**
ELEKTRODENANSTEUERUNGSSCHEMATA FÜR ABSTIMMBARE LINSENSYSTEME
SCHÉMAS DE COMMANDE D'ÉLECTRODE POUR SYSTÈMES DE LENTILLE ACCORDABLES

(30) Priority: 08.12.2020 US 202063122851 P
(43) Date of publication of application: 18.10.2023
(73) Proprietor: Apple Inc., Cupertino, CA 95014 (US)
(72) Inventor: GILL, Patrick R, Cupertino, CA 95014 (US); LUH, Louis, Cupertino, CA 95014 (US); SMITH, Eric G, Cupertino, CA 95014 (US)
(74) Representative: COPA Copenhagen Patents
(86) International application number: PCT/US2021/061819
(87) International publication number: WO 2022/125395

(56) References cited:
- EP-A2- 1 517 291
- WO-A1-98/44481
- WO-A1-2017/216716

## Description

### Background

This relates generally to optical systems, and, more particularly, to devices with tunable lenses.

Eyewear may include optical systems such as lenses. For example, eyewear such as a pair of glasses may include lenses that allow users to view the surrounding environment.

It can be challenging to design devices such as these. If care is not taken, the optical systems in these devices may not be able to accommodate different eye prescriptions and may not perform satisfactorily.

The following documents represent prior art relevant to the present invention: WO 2017/216716 A1, EP 1517291 A2 and WO 98/44481 A1.

### Summary

Eyeglasses may be worn by a user and may include one or more adjustable lenses each aligned with a respective one of a user's eyes. For example, a first adjustable lens may align with the user's left eye and a second adjustable lens may align with the user's right eye. Each of the first and second adjustable lenses may include one or more liquid crystal cells or other voltage-modulated optical material. Each liquid crystal cell may include a layer of liquid crystal material interposed between transparent substrates. Control circuitry may apply control signals to an array of electrodes in the liquid crystal cell to adjust a phase profile of the liquid crystal material.

A set of digital-to-analog converter circuits may provide voltages to the electrodes. To save space and reduce the number of routing lines on the lens, a smaller number of digital-to-analog converter circuits may provide voltages to a greater number of electrodes by sequentially coupling and decoupling the digital-to-analog converter circuits to different groups of electrodes, advancing from group-to-group with each clock cycle. Switching circuitry may be used to advance the digital-to-analog converter circuits by a number of electrodes that is less than the number of digital-to-analog converter circuits, such that at least one of the electrodes is driven at the same voltage for two consecutive clock cycles. This in turn helps to avoid erroneous voltages resulting from the parasitic capacitances between adjacent fingers

An adjustable lens according to the invention is disclosed in claim 1.

Liquid crystal materials are herein used by way of an example of an electrically modulated optical material. Other electrically modulated optical materials can be used in place of the liquid crystals described herein.

### Brief Description of the Drawings

FIG. 1 is a diagram of illustrative system that includes eyeglasses with adjustable lenses in accordance with an embodiment.
FIG. 2 is a cross-sectional side view of an illustrative liquid crystal cell that may be used to form an adjustable lens in accordance with an embodiment.
FIG. 3 is a cross-sectional side view of an illustrative liquid crystal module having first and second liquid crystal layers with antiparallel liquid crystal alignment orientations in accordance with an embodiment.
FIGS. 4 and 5 are graphs showing how an adjustable lens may be adjusted so that its refractive index varies as a function of position to produce a desired lens profile in accordance with an embodiment.
FIG. 6 is a top view of an illustrative adjustable lens component having arrays of electrodes that extend along first and second directions in accordance with an embodiment.
FIG. 7 is a top view of an illustrative adjustable lens component having arrays of electrodes that extend along first, second, and third directions in accordance with an embodiment.
FIG. 8 is an exploded perspective view of an illustrative adjustable lens having first, second, and third liquid crystal cells, each with an associated orientation of electrodes, in accordance with an embodiment.
FIG. 9 is an exploded perspective view of an illustrative adjustable lens having first, second, and third liquid crystal modules, each with an associated orientation of electrodes, in accordance with an embodiment.
FIG. 10 is a perspective view of a foveated adjustable lens system in accordance with an embodiment.
FIG. 11 is a top view of an illustrative adjustable lens system having a subset of electrodes driven such as to create a lens patch with variable optical power that aligns with a user's gaze in accordance with an embodiment.
FIG. 12 is a schematic diagram of illustrative driving circuitry for driving electrodes in an adjustable lens in accordance with an embodiment.
FIG. 13 is a timing diagram and corresponding data waveform diagram for an illustrative electrode driving scheme for an adjustable lens in accordance with an embodiment.
FIG. 14 is a timing diagram and corresponding data waveform diagram for an illustrative electrode driving scheme with pre-charging of a future group of electrodes in accordance with an embodiment.
FIG. 15 is a schematic diagram of illustrative driving circuitry for driving electrodes and pre-charging an adjacent group of electrodes in accordance with an embodiment.
FIG. 16 is a timing diagram and corresponding data waveform diagram for an illustrative electrode driving scheme with pre-charging of an adjacent group of electrodes in accordance with an embodiment

### Detailed Description

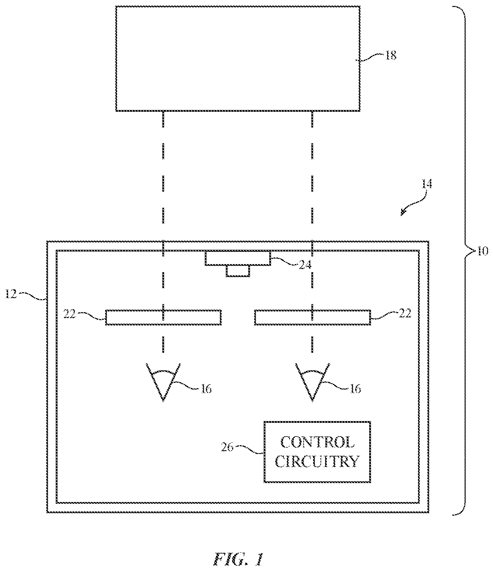

An illustrative system having a device with one or more electrically adjustable optical elements is shown in FIG. 1. System 10 may include a head-mounted device such as eyeglasses 14 (sometimes referred to as glasses 14). Glasses 14 may include one or more optical systems such as adjustable lens components 22 mounted in a support structure such as support structure 12. Structure 12 may have the shape of a pair of eyeglasses (e.g., supporting frames), may have the shape of goggles, may form a housing having a helmet shape, or may have other configurations to help in mounting and securing the components of glasses 14 on the head of a user.

Adjustable lens components 22 may form lenses that allow a viewer (e.g., a viewer having eyes 16) to view external objects such as object 18 in the surrounding environment. Glasses 14 may include one or more adjustable lens components 22, each aligned with a respective one of a user's eyes 16. As an example, lens components 22 may include a left lens 22 aligned with a viewer's left eye and may include a right lens 22 aligned with a viewer's right eye. This is, however, merely illustrative. If desired, glasses 14 may include adjustable lens components 22 for a single eye.

Adjustable lenses 22 may be corrective lenses that correct for vision defects. For example, eyes 16 may have vision defects such as myopia, hyperopia, presbyopia, astigmatism, higher-order aberrations, and/or other vision defects. Corrective lenses such as lenses 22 may be configured to correct for these vision defects. Lenses 22 may be adjustable to accommodate users with different vision defects and/or to accommodate different focal ranges. For example, lenses 22 may have a first set of optical characteristics for a first user having a first prescription and a second set of optical characteristics for a second user having a second prescription. Glasses 14 may be used purely for vision correction (e.g., glasses 14 may be a pair of spectacles) or glasses 14 may include displays that display virtual reality or augmented reality content (e.g., glasses 14 may be a head-mounted display). In virtual reality or augmented reality systems, adjustable lens components 22 may be used to move content between focal planes from the perspective of the user. Arrangements in which glasses 14 are spectacles that do not include displays are sometimes described herein as an illustrative example.

Glasses 14 may include control circuitry 26. Control circuitry 26 may include processing circuitry such as microprocessors, digital signal processors, microcontrollers, baseband processors, image processors, application-specific integrated circuits with processing circuitry, and/or other processing circuitry and may include random-access memory, read-only memory, flash storage, hard disk storage, and/or other storage (e.g., a non-transitory storage media for storing computer instructions for software that runs on control circuitry 26).

If desired, control circuitry 26 may include one or more energy storage devices such as one or more batteries and capacitors. Energy storage devices in eyeglasses 14 may be charged via a wired connection or, if desired, eyeglasses 14 may charge energy storage devices using wirelessly received power (e.g., inductive wireless power transfer, using capacitive wireless power transfer, and/or other wireless power transfer configurations).

Glasses 14 may include input-output circuitry such as eye state sensors, range finders disposed to measure the distance to external object 18, touch sensors, buttons, microphones to gather voice input and other input, sensors, and other devices that gather input (e.g., user input from viewer 16) and may include light-emitting diodes, displays, speakers, and other devices for providing output (e.g., output for viewer 16). Glasses 14 may, if desired, include wireless circuitry and/or other circuitry to support communications with a computer or other external equipment. If desired, a sensor system such as sensor system 24 may be used to gather input during use of glasses 14. Sensor system 24 may include an accelerometer, compass, an ambient light sensor or other light detector, a proximity sensor, a scanning laser system, and other sensors for gathering input during use of glasses 14. Sensor system 24 may be used to track a user's eyes 16. For example, sensor system 24 may include one or more digital image sensors, lidar (light detection and ranging) sensors, ultrasound sensors, or other suitable sensors for tracking the location of a user's eyes. As an example, sensor system 24 may be used by control circuitry 26 to gather images of the pupils and other portions of the eyes of the viewer. The locations of the viewer's pupils and the locations of the viewer's pupils relative to specular glints from light sources with known positions or the rest of the viewer's eyes may be used to determine the locations of the centers of the viewer's eyes (i.e., the centers of the user's pupils) and the direction of view (gaze direction) of the viewer's eyes. In some arrangements, sensor system 24 may include a wavefront sensor that measures the aberrations of a user's eyes. Control circuitry 26 may then adjust the optical properties of lens component 22 to correct the user-specific aberrations detected by the wavefront sensor.

Control circuitry 26 may also control the operation of optical elements such as adjustable lens components 22. Adjustable lens components 22, which may sometimes be referred to as adjustable lenses, adjustable lens systems, adjustable optical systems, adjustable lens devices, tunable lenses, fluid-filled variable lenses, etc., may contain electrically adjustable material such as liquid crystal material, volume Bragg gratings, or other electrically modulated material that may be adjusted to produce customized lenses. Each of components 22 may contain an array of electrodes that apply electric fields to portions of a layer of liquid crystal material or other voltage-modulated optical material with an electrically adjustable index of refraction (sometimes referred to as an adjustable lens power or adjustable phase profile). By adjusting the voltages of signals applied to the electrodes, the index of refraction profile of components 22 may be dynamically adjusted. This allows the size, shape, and location of the lenses formed within components 22 to be adjusted.

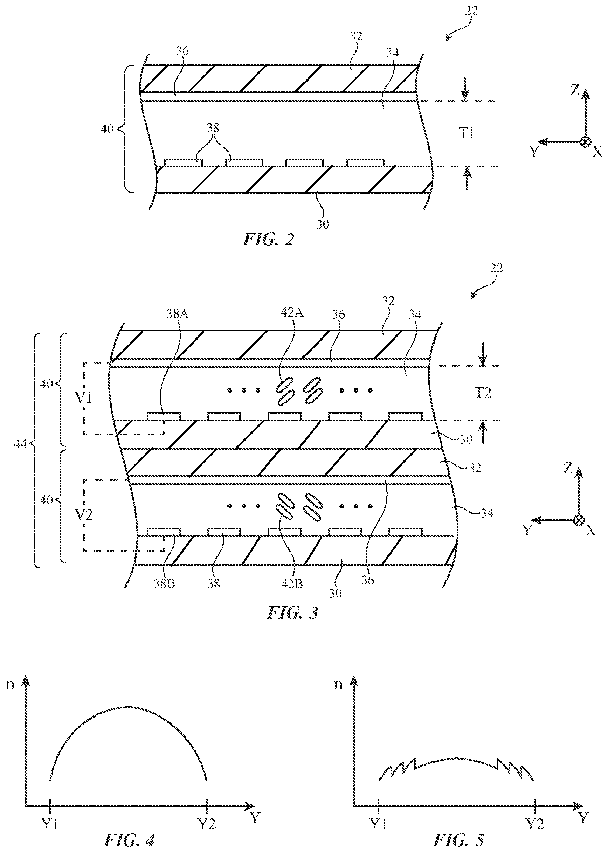

A cross-sectional side view of an illustrative adjustable lens component is shown in FIG. 2. As shown in FIG. 2, component 22 may include liquid crystal cell 40. Liquid crystal cell 40 may have a layer of voltage-modulated optical material such as liquid crystal layer 34. Liquid crystal layer 34 may be interposed between transparent substrates such as upper substrate 32 and lower substrate 30. Substrates 32 and 30 may be formed from clear glass, sapphire or other transparent crystalline material, cellulose triacetate, transparent plastic, or other transparent layers. Component 22 may have a pattern of electrodes that can be supplied with signals from control circuitry 26 to produce desired voltages on component 22. In the example of FIG. 2, these electrodes include elongated electrodes (e.g., strip-shaped electrodes) such as electrodes 38 on substrate 30 that run along the X dimension and a common electrode such as common electrode 36 on substrate 32 (e.g., a blanket layer of conductive material on substrate 32). Electrodes 36 and 38 may be formed from transparent conductive material such as indium tin oxide, conductive polymers such as poly(3,4-ethylenedioxythiophene) polystyrene sulfonate (PEDOT:PPS), silver nanowires, or other transparent electrode structures and may be located on outer and/or inner surfaces of substrates 32 and 30. In some embodiments, electrode 36 may be a blanket conductive layer that serves as a uniform ground plane. In other embodiments, electrode 36 may be a grid of orthogonal conductive lines that can be driven at different voltages using a passive matrix addressing scheme. Arrangements where electrode 36 is a blanket layer of conductive material that serves as a common voltage electrode may sometimes be described herein as an illustrative example.

It should be understood that liquid crystal material is merely an example of an electrically modulated optical material that may be modulated using electrodes 38 in cells 40. If desired, cells 40 may include any other suitable type of electrically modulated optical material in place of the liquid crystal material in cells 40.

At each location of electrode strips 38 in component 22, a desired voltage may be applied across liquid crystal layer 34 by supplying a first voltage to electrode 38 and a second voltage (e.g., a ground voltage) to common electrode 36. The liquid crystal between the two electrodes will receive an applied electric field with a magnitude that is proportional to the difference between the first and second voltages on the electrodes. By controlling the voltages on electrodes 38 and common electrode 36, the index of refraction of liquid crystal layer 34 of component 22 can be dynamically adjusted to produce customized lenses.

In the example of FIG. 2, strip-shaped electrodes 38 (sometimes referred to as finger electrodes, patterned electrodes, etc.) extend parallel to the X-axis. This allows the index-of-refraction profile (sometimes referred to as the phase profile) of liquid crystal cell 40 to be modulated in the Y-dimension by applying the desired voltages to each finger electrode 38.

When an electric field is applied to the liquid crystals of layer 34, the liquid crystals change orientation. The speed at which a given liquid crystal material can be reoriented is limited by factors such as the thickness of layer 34 (e.g., thickness T1 of FIG. 2, sometimes referred to as the cell gap). To increase the tuning speed of liquid crystal layer 34 while still achieving a suitable tuning range, adjustable lens component 22 may include two or more liquid crystal cells 40 stacked on top of one another. This type of arrangement is illustrated in FIG. 3.

As shown in FIG. 3, adjustable lens component 22 may include liquid crystal module 44. Liquid crystal module 44 may include two or more liquid crystal cells 40. Each liquid crystal cell may include liquid crystal layer 34 interposed between upper substrate 32 and lower substrate 30. Finger electrodes 38 may be formed on each lower substrate 30 and may extend parallel to the X-axis. Common electrode 36 may be formed on each upper substrate 32. If desired, common voltage electrode 36 may be formed on lower substrate 30 and finger electrodes 38 may be formed on upper substrate 32. The example of FIGS. 2 and 3 is merely illustrative.

The cell gap of each liquid crystal cell 40 in module 44 may be less than that of liquid crystal cell 40 of FIG. 2. For example, liquid crystal layers 34 of module 44 in FIG. 3 may each have a thickness T2, which is less than thickness T1 of liquid crystal layer 34 in cell 40 of FIG. 2. The reduced cell gap increases the tuning speed of liquid crystal layers 34 while still maintaining satisfactory tuning range (sometimes referred to as lens power range).

If desired, the liquid crystal alignment orientation (sometimes referred to as a rubbing direction) of liquid crystal cells 40 in module 44 may be antiparallel. In particular, liquid crystal molecules 42A of upper liquid crystal cell 40 may have a first liquid crystal alignment orientation, and liquid crystal molecules 42B of lower liquid crystal cell 40 may have a second liquid crystal alignment orientation that is antiparallel to the first liquid crystal alignment orientation. This type of arrangement may help reduce the angle dependency of phase retardation in module 44.

At each location of finger electrode 38 in component 22, a desired voltage may be applied across each liquid crystal layer 34 by supplying a first voltage to finger electrode 38 and a second voltage (e.g., a ground voltage) to common electrode 36. The liquid crystal between the two electrodes will receive an applied electric field with a magnitude that is proportional to the difference between the first and second voltages on the electrodes. By controlling the voltages on electrodes 38 and common electrode 36, the index of refraction of each liquid crystal layer 34 of component 22 can be dynamically adjusted to produce customized lenses. Because finger electrodes 38 extend along the X-dimension, the phase profile of each liquid crystal cell 40 may be modulated in the Y-dimension by applying the desired voltages to each finger electrode 38.

Overlapping portions of the two liquid crystal layers 34 in module 44 may be controlled using the same or different voltages to achieve the desired index of refraction at that portion of module 44. For example, finger electrode 38A of upper liquid crystal cell 40 in module 44 may overlap finger electrode 38B of lower liquid crystal cell 40 in module 44. A first voltage V1 may be applied across a portion of upper liquid crystal layer 34 overlapping finger electrode 38A, and a second voltage V2 may be applied across a portion of lower liquid crystal layer 34 overlapping finger electrode 38B. Voltages V1 and V2 may be different or may be the same. Control circuitry 26 may determine the ratio of V1 to V2 based on the desired index of refraction at that portion of the liquid crystal module 44 and based on the disposition of the user's eyes 16.

FIGS. 4 and 5 show examples of illustrative index-of-refraction profiles that may be generated by adjustable lens component 22 of FIG. 2 and/or by adjustable lens component 22 of FIG. 3. In the example of FIG. 4, refractive index n has been varied continuously between peripheral lens edges Y1 and Y2. In the example of FIG. 5, refractive index n has been varied discontinuously to produce an index-of-refraction profile appropriate for forming a Fresnel lens. These examples are merely illustrative. If desired, other suitable index-of-refraction profiles may be used using adjustable lens components of the type shown in FIGS. 2 and 3.

In the examples of FIGS. 2 and 3, adjustable lens component 22 includes electrodes that extend in one direction (e.g., the X-dimension of FIGS. 2 and 3), allowing adjustable lens component 22 to modulate the phase profile of component 22 along one direction (e.g., the Y-dimension of FIGS. 2 and 3). If desired, adjustable lens component 22 may include electrodes that extend in multiple directions, thus allowing adjustable lens component 22 to modulate the phase profile of component 22 along multiple directions.

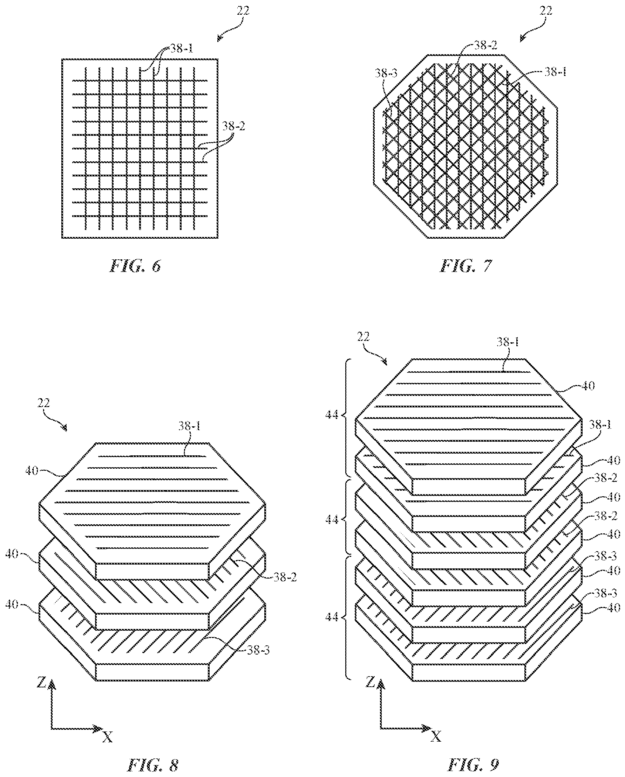

FIG. 6 is a top view of illustrative adjustable lens component 22 having first finger electrodes 38-1 oriented along a first direction and second finger electrodes 38-2 oriented along a second direction different from the first direction. First finger electrodes 38-1 may, for example, be oriented at 90-degree angles relative to second finger electrodes 38-2, or other suitable orientations may be used. Each set of electrodes may modulate the phase profile of a liquid crystal layer along an associated dimension. Adjustable lens component 22 of the type shown in FIG. 6 with two orientations of electrodes may therefore be used to create phase profiles that vary along two dimensions. For example, electrodes 38-1 may produce a first quadratic phase profile along a first dimension and electrodes 38-2 may produce a second quadratic phase profile along a second dimension, thus providing lens components 22 with a combined phase profile matching that of a crossed-cylinder lens, with a spherical profile where the cylinders overlap (as an example).

FIG. 7 is a top view of an illustrative adjustable lens component 22 having first finger electrodes 38-1 oriented along a first direction, second finger electrodes 38-2 oriented along a second direction, and third finger electrodes 38-3 oriented along a third direction. Finger electrodes 38-1, 38-2, and 38-3 may, for example, be separated by 60-degree angles or may have other suitable orientations. Each set of electrodes may modulate the phase profile of a respective liquid crystal layer along an associated dimension. Adjustable lens components 22 of the type shown in FIG. 7 with three orientations of electrodes may therefore be used to create phase profiles that vary along three dimensions.

The examples of FIGS. 6 and 7 in which lens component 22 includes two and three orientations of electrodes, respectively, are merely illustrative. If desired, lens component 22 may include one, two, three, four, five, six, more than six, or any other suitable number of orientations of electrodes to enable lens component 22 to achieve different phase profiles across any suitable number of dimensions. Lens components 22 with multiple orientations of electrodes may be configured to simultaneously correct for optical aberrations such as defocus, astigmatism, coma, trefoil, spherical, and/or other aberrations. Arrangements in which adjustable lens components 22 include three orientations of electrodes are sometimes described herein as an illustrative example.

FIGS. 8 and 9 show exploded perspective views of illustrative lens components 22 with three orientations of electrodes. In the example of FIG. 8, adjustable lens components 22 include three liquid crystal cells 40. Each liquid crystal cell 40 may have a structure of the type described in connection with FIG. 2, with finger electrodes 38-1, 38-2, and 38-3 oriented along three different directions. For example, finger electrodes 38-1 may be oriented at 0 degrees relative to the X-axis, finger electrodes 38-2 may be oriented at 120 degrees relative to the X-axis, and finger electrodes 38-3 may be oriented at 60 degrees relative to the X-axis. This is merely illustrative, however. In general, electrodes 38-1, 38-2, and 38-3 may have any suitable orientation.

In the example of FIG. 9, adjustable lens components 22 include three liquid crystal modules 44. Each liquid crystal module 44 may have a structure of the type described in connection with FIG. 3. In particular, each liquid crystal module 44 may include an upper liquid crystal cell 40 and a lower liquid crystal cell 40. The liquid crystal layers of the upper and lower liquid crystal cells 40 may, if desired, have antiparallel liquid crystal alignment orientations. As shown in FIG. 9, finger electrodes 38-1, 38-2, and 38-3 of liquid crystal modules 44 are oriented along three different directions. For example, finger electrodes 38-1 may be oriented at 0 degrees relative to the X-axis, finger electrodes 38-2 may be oriented at 120 degrees relative to the X-axis, and finger electrodes 38-3 may be oriented at 60 degrees relative to the X-axis. This is merely illustrative, however. In general, electrodes 38-1, 38-2, and 38-3 may have any suitable orientation.

The foregoing examples in which lens components 22 have a rectangular shape (FIG. 6) or a hexagonal shape (FIGS. 7, 8, and 9) are merely illustrative. If desired, lens component 22 (e.g., substrate 30, substrate 32, liquid crystal layer 34, etc.) may have circular shapes, triangular shapes, pentagonal shapes, oval shapes, ergonomic shapes, convex shapes, or any other suitable shape. Arrangements in which lens components 22 are hexagonal are sometimes described herein as an illustrative example.

In some arrangements, control circuitry 26 may modulate the lens power across the entirety of each lens component 22. This type of arrangement may be useful in configurations where glasses 14 do not include sensor system 24 for eye tracking and/or when the tuning speed of lens components 22 is not sufficiently high to maintain focus when the user's eye moves. Modulating the lens power from edge to edge of components 22 may ensure that the image remains in focus even when the user's eye moves around.

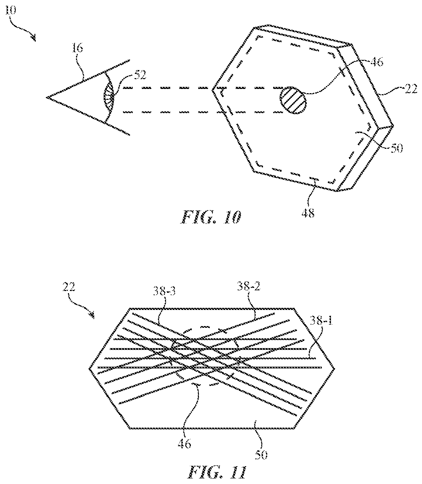

In other arrangements, control circuitry 26 may modulate lens power across only a portion of lens component 22. This type of foveated lens arrangement is illustrated in FIG. 10.

Viewers are most sensitive to image detail in the main field of view. Peripheral regions of a lens may therefore be provided with a different phase profile than the region of the lens within the user's gaze. The peripheral regions of the lens that are outside of the viewer's gaze may, for example, be optically unmodulated, may be provided with a phase profile that is constant across a given area, and/or may be provided with a phase profile that is less spatially varied than the portion of the lens in the direction of the viewer's gaze. The regions of the lens outside of the user's gaze may have an optical power magnitude that is less than the optical power magnitude of the lens region within the user's gaze. By including lower power areas in a variable-power lens, total required variable phase depth and power consumption can be minimized and/or reduced. Further, magnification changes (which could be disorienting to the user) are experienced only over the area of the lens where focal power is modulated. Gaze detection data (e.g., gathered using sensor system 24) may be used in determining which portion of lens component 22 is being directly viewed by viewer 16 and should therefore have the optically appropriate prescription and which portions of lens components 22 are in the viewer's peripheral vision and could be left optically unmodulated or otherwise provided with a phase profile having less spatial variation than the portions of lens components 22 within the viewer's gaze.

As shown in FIG. 10, for example, adjustable lens component 22 may have an active area such as active area 48. Within active area 48, adjustable lens components 22 may include one or more materials having an electrically adjustable index of refraction (e.g., liquid crystal cells 40 of the type discussed in connection with FIGS. 2-9). Control circuitry 26 may dynamically adjust the phase profile of lens components 22. Active area 48 may include gaze area 46 and peripheral area 50. Gaze area 46 corresponds to the portions of lens components 22 that are within the user's gaze, whereas peripheral area 50 corresponds to the portions of lens components 22 that are outside of the user's gaze (e.g., portions of lens components 22 that are in the user's peripheral vision). Gaze area 46 of lens components 22 may be provided with a different phase profile than peripheral area 50. For example, gaze area 46 may be optically modulated to produce a first lens power, while peripheral area 50 may be left optically unmodulated, may be optically modulated to produce a second lens power magnitude that is less than the first lens power magnitude, and/or may be optically modulated to produce a phase profile that is less spatially varied than the phase profile of gaze area 46.

Control circuitry 26 may dynamically adjust the location, size, resolution, or shape of gaze area 46 and peripheral area 50 during operation of glasses 14. For example, control circuitry 26 may use sensor system 24 to track a user's gaze and may adjust the location of gaze area 46 so that it remains aligned with the user's gaze. If desired, the size of gaze area 46 may be based on the size of the foveal region in a user's eyes, the user's pupil diameter, and/or the desired phase profile for gaze area 46. Gaze area 46 may, for example, have a diameter between 4 mm and 9 mm, between 7 mm and 9 mm, between 6 mm and 10 mm, between 4 mm and 8 mm, between 8 mm and 12 mm, greater than 10 mm, less than 10 mm, or any other suitable size. The size of gaze area 46 may be based on a distance between lens components 22 and a user's eyes 16, may be based on the size of the user's pupil 52 (e.g., as measured with sensor system 24 or as inferred based on eye charts, ambient light levels, or other data), and/or may be based on other information.

In gaze area 46, control circuitry 26 may modulate the index of refraction of liquid crystal material 34 to obtain the desired lens power and the desired vision correction properties for the viewer. This may include, for example, controlling each finger electrode 38 independently or controlling small sets of finger electrodes 38 with common control signals. In peripheral area 50, control circuitry 26 may control larger sets of finger electrodes 38 with common control signals and/or may provide a ground or baseline voltage to finger electrodes 38 (e.g., may deactivate some finger electrodes 38). If desired, optical power may be constant across gaze area 46 and phase may be flat across peripheral area 50. In other suitable arrangements, optical power may be varied across gaze area 46 and/or peripheral area 50.

FIG. 11 is a top view of illustrative adjustable lens components 22 showing how areas of different optical power magnitude may be achieved. As shown in FIG. 11, adjustable lens components 22 may include gaze area 46 and peripheral area 50. Gaze area 46 may have a first lens power magnitude and peripheral area 46 may have a second lens power magnitude that is less than the first lens power magnitude. Gaze area 46 may, for example, align with the foveal region of a user's eyes 16 (as shown in FIG. 10). Electrodes that overlap (i.e., pass through) gaze area 46 such as electrodes 38-1, 38-2, and 38-3 may be controlled to make a desired prescription within gaze area 46 and electrodes that do not pass through gaze area 46 (not shown in FIG. 11) may be controlled to produce a spatially constant phase or a phase that otherwise has less spatial variation than that of gaze area 46.

Control circuitry 26 may dynamically adjust the location of gaze area 46 based on gaze location information from sensor system 24 by actively identifying which electrodes are within a user's gaze and which electrodes are outside of a user's gaze. Electrodes within a user's gaze (e.g., in area 46) may be operated in optically modulated mode, and electrodes outside of the user's gaze (e.g., in area 50) may be operated in constant phase mode or may otherwise be operated to produce a phase profile with less spatial variation than that of gaze area 46.

Whereas lens components with only two different electrode orientations (e.g., lens component 22 of FIG. 6) may be capable of expressing spherical profiles and correcting one of two modes of astigmatism, lens components with three or more electrode orientations may be capable of expressing a greater number of different types of phase profiles (to correct higher order aberrations, astigmatism with any rotational axis, coma, spherical aberration, etc.). Additionally, using more than two electrode orientations may help ease the transition between gaze region 46 (e.g., where the phase profile of liquid crystal layer 34 is actively controlled) and peripheral region 50 (e.g., where the phase profile of liquid crystal layer 34 is not actively controlled).

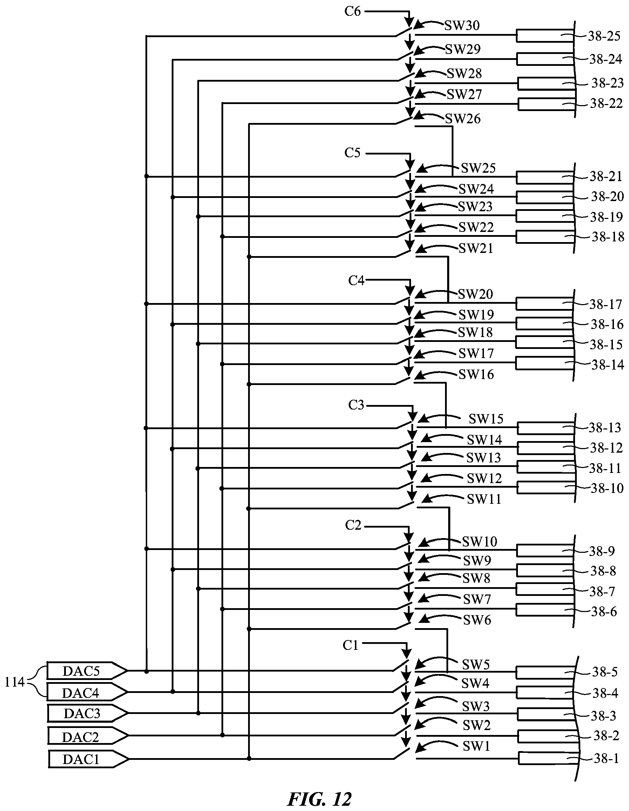

FIG. 12 is a schematic diagram showing a portion of illustrative driving circuitry for driving finger electrodes 38. As shown in FIG. 12, finger electrodes 38 may receive voltages from digital-to-analog circuitry such as digital-to-analog converter circuits 114. Digital-to-analog converter circuits 114 may include one or more integrated circuits mounted directly to lens 22 (e.g., in a chip-on-glass arrangement) or may include one or more integrated circuits mounted to a separate substrate and coupled to lens 22 through one or more flex circuits or other types of paths.

In arrangements where adjustable lens component 22 includes multiple liquid crystal cells 40, it may be challenging to provide the desired control signals to finger electrodes 38. There may be a large number of finger electrodes 38 in each liquid crystal cell 40. For example, each liquid crystal cell 40 may include 100 to 200 finger electrodes 38, 200 to 300 finger electrodes 38, 300 to 400 finger electrodes 38, more than 400 finger electrodes 38, less than 400 finger electrodes 38, or other suitable number of finger electrodes 38. When combined with other liquid crystal cells 40, there may be thousands (e.g., more than 3000, more than 4000, less than 4000, or other suitable number) of finger electrodes 38 in a single adjustable lens component 22, which may only be a few centimeters wide (e.g., 3 cm to 4 cm wide, 2 cm to 5 cm wide, more than 5 cm wide, less than 5cm wide, etc.).

To reduce the amount of control circuitry on lens 22 and the number of signal paths needed from off-lens control circuitry (e.g., portions of control circuitry 26 in eyeglasses 10 that are not located on lens 22) to finger electrodes 38 on lens 22, control circuitry 26 may use an electrode driving scheme in which there are fewer digital-to-analog converter circuits 114 than there are finger electrodes 38. To accommodate a relatively large number of finger electrodes 38 with a relatively small number of digital-to-analog converter circuits 114, a group of digital-to-analog converter circuits 114 may sequentially be coupled to different groups of finger electrodes 38. For example, a group of N digital to digital-to-analog converter circuits 114 may be coupled to a first group of N finger electrodes 38 during a first clock cycle. During this first clock cycle, each of the N digital-to-analog converter circuits 114 may provide an analog voltage to a respective one of the N finger electrodes 38 in the first group. During a subsequent second clock cycle, the N digital-to-analog converter circuits 114 may be decoupled from the first group of N finger electrodes 38 and may be coupled to a second group of N finger electrodes 38. During the second clock cycle, each of the N digital-to-analog converter circuits 114 may provide an analog voltage to a respective one of the N finger electrodes 38 in the second group. This process may repeat during operation of lens 22, with digital-to-analog converter circuits 114 advancing to a different group of finger electrodes 38 at each clock cycle.

In one illustrative driving scheme, a group of N digital-to-analog converter circuits 114 may advance by N number of finger electrodes 38 with each clock cycle. For example, if there are five digital-to-analog converter circuits 114 (as in the example of FIG. 12) providing voltages to 25 finger electrodes 38 (e.g., finger electrode 38-1 through finger electrode 38-25), then digital-to-analog converter circuits 114 may be coupled to finger electrodes 38-1, 38-2, 38-3, 38-4, and 38-5 in a first clock cycle; may be coupled to finger electrodes 38-6, 38-7, 38-8, 38-9, and 38-10 in a second clock cycle; may be coupled to finger electrodes 38-11, 38-12, 38-13, 38-14, and 38-15 in a third clock cycle; may be coupled to finger electrodes 38-16, 38-17, 38-18, 38-19, and 38-20 in a fourth clock cycle; and may be coupled to finger electrodes 38-21, 38-22, 38-23, 38-24, and 38-25 in a fifth clock cycle. The N digital-to-analog converter circuits 114 may keep advancing by N finger electrodes 38 with each clock cycle until reaching the last group of finger electrodes 38. After providing signals to the last group of finger electrodes 38, the N digital-to-analog converter circuits 114 may return to the first group of finger electrodes 38 and the cycle may repeat.

In another illustrative driving scheme, a group of N digital-to-analog converter circuits 114 may advance by N-P finger electrodes 38 with each clock cycle, where P is a number ranging from 1 to N-1. For example, if there are five digital-to-analog converter circuits 114 for every 25 finger electrodes 38, then digital-to-analog converter circuits 114 may advance by four finger electrodes 38 with each clock cycle in arrangements where P is equal to one; may advance by three finger electrodes 38 with each clock cycle in arrangements where P is equal to two; may advance by two finger electrodes 38 with each clock cycle in arrangements where P is equal to three; or may advance by one finger electrode 38 with each clock cycle in arrangements where P is equal to four.

Control lines and switching circuitry (e.g., thin-film transistor switches such as n-type or p-type thin-film transistors and/or other suitable types of switches) may be used to couple digital-to-analog converter circuits 114 to subsequent groups of finger electrodes 38. For example, in arrangements where there are five digital-to-analog converter circuits 114 (e.g., DAC1, DAC2, DAC3, DAC4, and DAC5) advancing by four finger electrodes 38 with each clock cycle, a first control line C1 may provide control signals to switches SW1, SW2, SW3, SW4, and SW5 to couple and decouple digital-to-analog converter circuits 114 to respective electrodes 38-1, 38-2, 38-3, 38-4, and 38-5; a second control line C2 may provide control signals to switches SW6, SW7, SW8, SW9, and SW10 to couple and decouple digital-to-analog converter circuits 114 to respective electrodes 38-5, 38-6, 38-7, 38-8, and 38-9; a third control line C3 may provide control signals to switches SW11, SW12, SW13, SW14, and SW15 to couple and decouple digital-to-analog converter circuits 114 to respective electrodes 38-9, 38-10, 38-11, 38-12, and 38-13; a fourth control line C4 may provide control signals to switches SW16, SW17, SW18, SW19, and SW20 to couple and decouple digital-to-analog converter circuits 114 to respective electrodes 38-13, 38-14, 38-15, 38-16, and 38-17; a fifth control line C5 may provide control signals to switches SW21, SW22, SW23, SW24, and SW25 to couple and decouple digital-to-analog converter circuits 114 to respective electrodes 38-17, 38-18, 38-19, 38-20, and 38-21; and a sixth control line C6 may provide control signals to switches SW26, SW27, SW28, SW29, and SW30 to couple and decouple digital-to-analog converter circuits 114 to respective electrodes 38-21, 38-22, 38-23, 38-24, and 38-25. In arrangements where digital-to-analog converter circuits 114 advance by fewer than N-1 electrodes 38 with each clock cycle, there may be a greater number of switches to allow for more than one electrode 38 from each group to be driven for two clock cycles in a row. Control signal lines such as control lines C1, C2, C3, C4, and C5 may be outputs of a shift register, if desired.

This type of driving scheme in which certain finger electrodes 38 are driven at a given voltage for two consecutive clock cycles may help avoid erroneous voltages on finger electrodes 38. For example, consider a scenario in which five digital-to-analog converter circuits 114 advance by five finger electrodes 38 with each clock cycle. In a first clock cycle, the five digital-to-analog converter circuits 114 may provide a first set of voltages to a first group of electrodes 38 such as electrodes 38-1, 38-2, 38-3, 38-4, and 38-5. In a second clock cycle, the five digital-to-analog converter circuits 114 may be decoupled from the first group of electrodes 38 and may be coupled to a second group of electrodes such as electrodes 38-6, 38-7, 38-8, 38-9, and 38-10. The parasitic capacitance between the last electrode of the first group (e.g., electrode 38-5) and the first electrode of the second group (e.g., electrode 38-6) creates an erroneous voltage on the last electrode 38-5 of the first group due to the change in voltage on the first electrode 38-6 of the second group at the start of the second clock cycle. These types of erroneous voltages on the last electrode 38 of each group may be avoided by redriving the last electrode 38 of each group at the same voltage for two consecutive clock cycles.

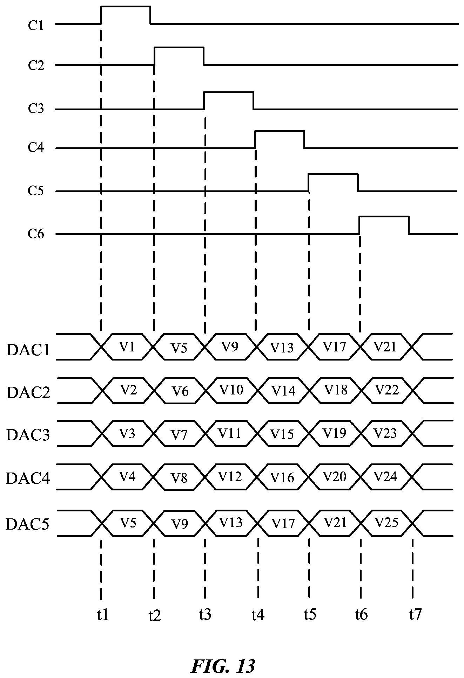

FIG. 13 is a timing diagram and corresponding voltage waveform diagram of an illustrative driving scheme in which N digital-to-analog converter circuits 114 advance by fewer than N electrodes 38 with each clock cycle to avoid erroneous voltages on certain electrodes 38. In the example of FIG. 13, there are five digital-to-analog converter circuits 114 for every 25 finger electrodes 38, and the five digital-to-analog converter circuits 114 advance by four finger electrodes 38 with each subsequent clock cycle. This is merely illustrative, however. In general, there may be any suitable number of digital-to-analog converter circuits 114 (e.g., 7, 24, 48, greater than 48, less than 48, etc.) for any suitable number of electrodes 38 (e.g., 10, 30, 45, 50, 75, 100, greater than 100, less than 100, etc.). Arrangements in which N digital-to-analog converter circuits 114 advance by fewer than N-1 electrodes 38 with each clock cycle may also be used. The example of FIG. 13 is merely illustrative.

In a first clock cycle at time t1, the signal on control line C1 may be pulsed high while the signals on control lines C2, C3, C4, C5, and C6 are pulsed low. This activates switches SW1, SW2, SW3, SW4, and SW5 to feed voltage V1 from DAC1 to finger electrode 38-1, voltage V2 from DAC2 to finger electrode 38-2, voltage V3 from DAC3 to finger electrode 38-3, voltage V4 from DAC4 to finger electrode 38-4, and voltage V5 from DAC5 to finger electrode 38-5.

In a second clock cycle at time t2, the signal on control line C2 may be pulsed high while the signals on control lines C1, C3, C4, C5, and C6 are pulsed low. This activates switches SW6, SW7, SW8, SW9, and SW10 to feed voltage V5 from DAC1 to finger electrode 38-5, voltage V6 from DAC2 to finger electrode 38-6, voltage V7 from DAC3 to finger electrode 38-7, voltage V8 from DAC4 to finger electrode 38-8, and voltage V9 from DAC5 to finger electrode 38-9.

In a third clock cycle at time t3, the signal on control line C3 may be pulsed high while the signals on control lines C1, C2, C4, C5, and C6 are pulsed low. This activates switches SW11, SW12, SW13, SW14, and SW15 to feed voltage V9 from DAC1 to finger electrode 38-9, voltage V10 from DAC2 to finger electrode 38-10, voltage V11 from DAC3 to finger electrode 38-11, voltage V12 from DAC4 to finger electrode 38-12, and voltage V13 from DAC5 to finger electrode 38-13.

In a fourth clock cycle at time t4, the signal on control line C4 may be pulsed high while the signals on control lines C1, C2, C3, C5, and C6 are pulsed low. This activates switches SW16, SW17, SW18, SW19, and SW20 to feed voltage V13 from DAC1 to finger electrode 38-13, voltage V14 from DAC2 to finger electrode 38-14, voltage V15 from DAC3 to finger electrode 38-15, voltage V16 from DAC4 to finger electrode 38-16, and voltage V17 from DAC5 to finger electrode 38-17.

In a fifth clock cycle at time t5, the signal on control line C5 may be pulsed high while the signals on control lines C1, C2, C3, C4, and C6 are pulsed low. This activates switches SW21, SW22, SW23, SW24, and SW25 to feed voltage V17 from DAC1 to finger electrode 38-17, voltage V18 from DAC2 to finger electrode 38-18, voltage V19 from DAC3 to finger electrode 38-19, voltage V20 from DAC4 to finger electrode 38-20, and voltage V21 from DAC5 to finger electrode 38-21.

In a sixth clock cycle at time t6, the signal on control line C6 may be pulsed high while the signals on control lines C1, C2, C3, C4, and C5 are pulsed low. This activates switches SW26, SW27, SW28, SW29, and SW30 to feed voltage V21 from DAC1 to finger electrode 38-21, voltage V22 from DAC2 to finger electrode 38-22, voltage V23 from DAC3 to finger electrode 38-23, voltage V24 from DAC4 to finger electrode 38-24, and voltage V25 from DAC5 to finger electrode 38-25.

If digital-to-analog converter circuits 114 provide voltages to more than 25 electrodes 38, then the driving scheme of FIG. 13 may continue from time t7 until voltages have been provided to all finger electrodes 38. The cycle of FIG. 13 may repeat, looping back to the first group of electrodes 38 after providing voltages to the last group of electrodes 38.

Because the last finger electrode 38 in each group (e.g., finger electrode 38-5 in the first group, finger electrode 38-9 in the second group, finger electrode 38-13 in the third group, finger electrode 38-17 in the fourth group, finger electrode 38-21 in the fifth group, etc.) is driven at the same voltage for two consecutive clock cycles, any excess charge deposited on the last finger 38 from the parasitic capacitance between the last finger 38 of each group and next finger 38 (e.g., fingers 38-6, 38-10, 38-14, 38-18, 38-22, etc.) will be removed. Additionally, because there is no net voltage change on the last finger 38 of each group (and thus no net current), there is no current leakage to fingers 38 that are adjacent to the last finger 38 in each group (e.g., fingers 38-4, 38-8, 38-12, 38-16, 38-20, etc.).

In some arrangements, the transistors of adjustable lens 22 may only be capable of delivering a certain amount of current, which can cause charging delays if care is not taken. To avoid delays that may otherwise result from this issue, control circuitry 26 may begin charging a group of finger electrodes ahead of time. For example, digital-to-analog converter circuits 114 may apply the desired voltages to a present group of finger electrodes 38 while also applying voltages to a future group of finger electrodes 38. This "pre-charging" process may help avoid delays that would otherwise result from waiting for a weak transistor to deliver the desired amount of current.

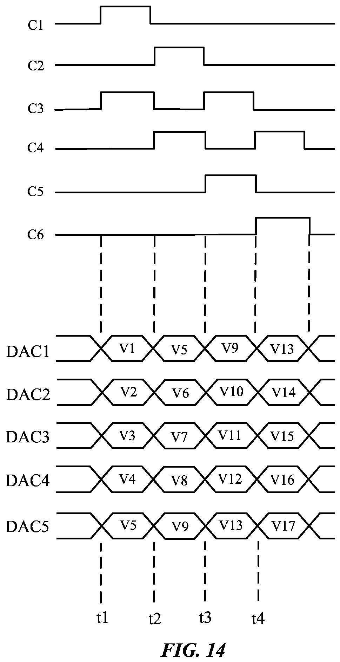

Care must be taken, however, to ensure that different voltages are not applied to the same finger electrode 38 at the same time. Because the last finger electrode 38 in each group (e.g., finger electrodes 38-5, 38-9, 38-13, 38-17, and 38-21 of FIG. 12) is re-driven at the same voltage when digital-to-analog converter circuits 114 advance to the next group, there is a risk that pre-charging the immediately adjacent group of finger electrodes could cause this finger electrode 38 to receive two different voltages at the same time. FIGS. 14, 15, and 16 show illustrative examples of how digital-to-analog converter circuits 114 may charge multiple groups of finger electrodes 38 at the same time without driving a given finger electrode at two different voltages at the same time.

In the example of FIG. 14 (a timing diagram and corresponding voltage waveform diagram of an illustrative driving scheme for the circuitry of FIG. 12), control circuity 26 may skip the immediately adjacent group of electrodes 38 and may instead pre-charge finger electrodes 38 at least two groups ahead.

In a first clock cycle at time t1, the signals on control lines C1 and C3 of FIG. 12 may be pulsed high while the signals on control lines C2, C4, C5, and C6 are pulsed low. This activates switches SW1, SW2, SW3, SW4, SW5, SW11, SW12, SW13, SW14, and SW15 to feed voltage V1 from DAC1 to finger electrodes 38-1 and 38-9, voltage V2 from DAC2 to finger electrodes 38-2 and 38-10, voltage V3 from DAC3 to finger electrodes 38-3 and 38-11, voltage V4 from DAC4 to finger electrodes 38-4 and 38-12, and voltage V5 from DAC5 to finger electrodes 38-5 and 38-13.

In a second clock cycle at time t2, the signals on control lines C2 and C4 may be pulsed high while the signals on control lines C1, C3, C5, and C6 are pulsed low. This activates switches SW6, SW7, SW8, SW9, SW10, SW16, SW17, SW18, SW19, and SW20 to feed voltage V5 from DAC1 to finger electrodes 38-5 and 38-13, voltage V6 from DAC2 to finger electrodes 38-6 and 38-14, voltage V7 from DAC3 to finger electrodes 38-7 and 38-15, voltage V8 from DAC4 to finger electrodes 38-8 and 38-16, and voltage V9 from DAC5 to finger electrodes 38-9 and 38-17.

In a third clock cycle at time t3, the signals on control lines C3 and C5 may be pulsed high while the signals on control lines C1, C2, C4, and C6 are pulsed low. This activates switches SW11, SW12, SW13, SW14, SW15, SW21, SW22, SW23, SW24, and SW25 to feed voltage V9 from DAC1 to finger electrodes 38-9 and 38-17, voltage V10 from DAC2 to finger electrodes 38-10 and 38-18, voltage V11 from DAC3 to finger electrodes 38-11 and 38-19, voltage V12 from DAC4 to finger electrodes 38-12 and 38-20, and voltage V13 from DAC5 to finger electrodes 38-13 and 38-21.

In a fourth clock cycle at time t4, the signals on control lines C4 and C6 may be pulsed high while the signals on control lines C1, C2, C3, and C5 are pulsed low. This activates switches SW16, SW17, SW18, SW19, SW20, SW26, SW27, SW28, SW29, and SW30 to feed voltage V13 from DAC1 to finger electrodes 38-13 and 38-21, voltage V14 from DAC2 to finger electrodes 38-14 and 38-22, voltage V15 from DAC3 to finger electrodes 38-15 and 38-23, voltage V16 from DAC4 to finger electrodes 38-16 and 38-24, and voltage V17 from DAC5 to finger electrodes 38-17 and 38-25.

If digital-to-analog converter circuits 114 provide voltages to more than 25 electrodes 38, then the driving scheme of FIG. 14 may continue until voltages have been provided to all finger electrodes 38. The cycle of FIG. 14 may repeat, looping back to the first group of electrodes 38 after providing voltages to the last group of electrodes 38.

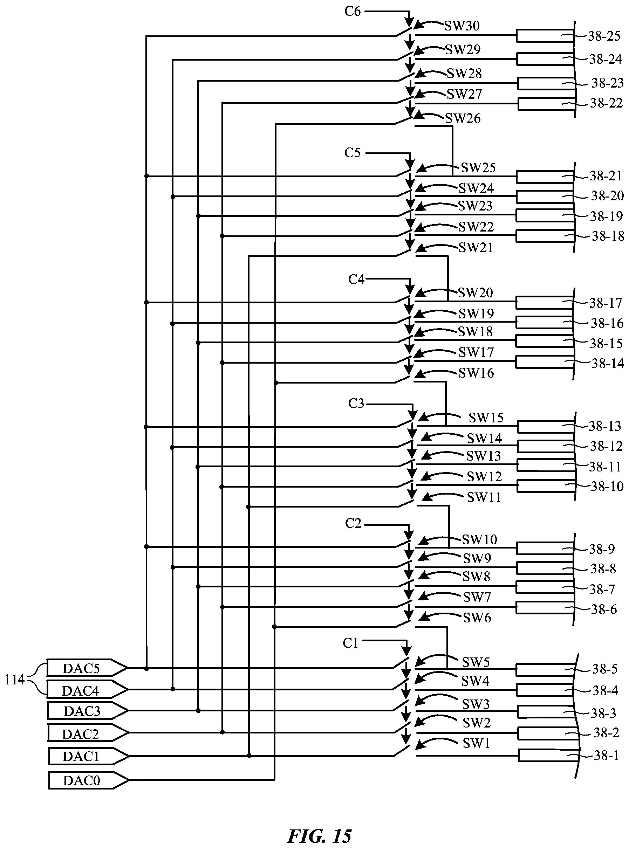

In the example of FIG. 15, adjustable lens 22 includes additional circuitry that allows control circuitry 26 to charge a present group of finger electrodes 38 while also pre-charging an immediately adjacent group of finger electrodes 38. To charge the immediately adjacent group of finger electrodes 38 without applying two different voltages to a single finger electrode 38 at the same time, adjustable lens 22 includes an additional digital-to-analog converter circuit 114 so that two of digital-to-analog converter circuits 114 can alternate between charging a present group of finger electrodes 38 and an immediately adjacent future group of finger electrodes 38. In particular, digital-to-analog converter circuits 114 may include DAC0, DAC1, DAC2, DAC3, DAC4, and DAC5. Two of digital-to-analog converter circuits 114 such as DAC0 and DAC1 may alternate being coupled to the present group of finger electrodes and the immediately adjacent group of electrodes.

In a first clock cycle, DAC1, DAC2, DAC3, DAC4, and DAC5 may provide analog voltages to respective finger electrodes 38-1, 38-2, 38-3, 38-4, and 38-5 in a first group. During this first clock cycle, DAC0, DAC2, DAC3, DAC4, and DAC5 may pre-charge the immediately adjacent group of finger electrodes 38. In particular, DAC2, DAC3, DAC4, and DAC5 may provide analog voltages to respective finger electrodes 38-6, 38-7, 38-8, and 38-9, while DAC0 provides an analog voltage to finger electrode 38-5. The voltage from DAC0 should be equal to the voltage from DAC5 in the first clock cycle to avoid providing two different voltages to finger electrode 38-5 at the same time.

In a second clock cycle, DAC0, DAC2, DAC3, DAC4, and DAC5 may provide analog voltages to respective finger electrodes 38-5, 38-6, 38-7, 38-8, and 38-9 in a second group. During this second clock cycle, DAC1, DAC2, DAC3, DAC4, and DAC5 may pre-charge the immediately adjacent group of finger electrodes 38. In particular, DAC2, DAC3, DAC4, and DAC5 may provide analog voltages to respective finger electrodes 38-10, 38-11, 38-12, and 38-13, while DAC1 provides an analog voltage to finger electrode 38-9. The voltage from DAC1 should be equal to the voltage from DAC5 in the second clock cycle to avoid providing two different voltages to finger electrode 38-9 at the same time.

This process may repeat during operation of lens 22, with digital-to-analog converter circuits 114 advancing to a subsequent group of finger electrodes 38 at each clock cycle and with DAC0 and DAC1 each alternating between charging a finger electrode 38 in the present group and pre-charging a finger electrode 38 in the immediately adjacent group.

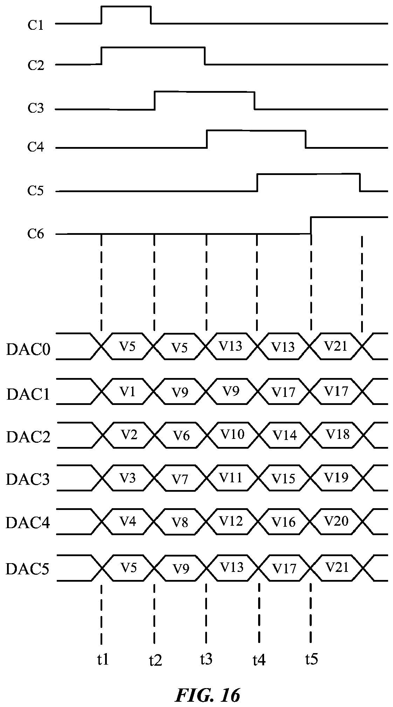

FIG. 16 is a timing diagram and corresponding voltage waveform diagram of an illustrative driving scheme for the circuitry of FIG. 15. In the example of FIGS. 15 and 16, there are six digital-to-analog converter circuits 114 for every 25 finger electrodes 38, with two of the six digital-to-analog converter circuits 114 alternating between charging a finger electrode 38 in the present group and pre-charging a finger electrode 38 in the immediately adjacent group. This is merely illustrative, however. In general, there may be any suitable number of digital-to-analog converter circuits 114 (e.g., 7, 24, 48, greater than 48, less than 48, etc.) for any suitable number of electrodes 38 (e.g., 10, 30, 45, 50, 75, 100, greater than 100, less than 100, etc.). Arrangements in which N digital-to-analog converter circuits 114 advance by fewer than N-1 or N-2 electrodes 38 with each clock cycle may also be used. The example of FIGS. 15 and 16 is merely illustrative.

In a first clock cycle at time t1, the signals on control lines C1 and C2 may be pulsed high while the signals on control lines C3, C4, C5, and C6 are pulsed low. This activates switches SW1, SW2, SW3, SW4, SW5, SW6, SW7, SW8, SW9, and SW10 to feed voltage V1 from DAC1 to finger electrode 38-1, voltage V2 from DAC2 to finger electrodes 38-2 and 38-6, voltage V3 from DAC3 to finger electrodes 38-3 and 38-7, voltage V4 from DAC4 to finger electrodes 38-4 and 38-8, voltage V5 from DAC5 to finger electrodes 38-5 and 38-9, and voltage V5 from DAC0 to finger electrode 38-5.

In a second clock cycle at time t2, the signals on control lines C2 and C3 may be pulsed high while the signals on control lines C1, C4, C5, and C6 are pulsed low. This activates switches SW6, SW7, SW8, SW9, SW10, SW11, SW12, SW13, SW14, and SW15 to feed voltage V5 from DAC0 to finger electrode 38-5, voltage V6 from DAC2 to finger electrodes 38-6 and 38-10, voltage V7 from DAC3 to finger electrodes 38-7 and 38-11, voltage V8 from DAC4 to finger electrodes 38-8 and 38-12, voltage V9 from DAC5 to finger electrodes 38-9 and 38-13, and voltage V9 from DAC1 to finger electrode 38-9.

In a third clock cycle at time t3, the signals on control lines C3 and C4 may be pulsed high while the signals on control lines C1, C2, C5, and C6 are pulsed low. This activates switches SW11, SW12, SW13, SW14, SW15, SW16, SW17, SW18, SW19, and SW20 to feed voltage V9 from DAC1 to finger electrode 38-9, voltage V10 from DAC2 to finger electrodes 38-10 and 38-14, voltage V11 from DAC3 to finger electrodes 38-11 and 38-15, voltage V12 from DAC4 to finger electrodes 38-12 and 38-16, voltage V13 from DAC5 to finger electrodes 38-13 and 38-17, and voltage V13 from DAC0 to finger electrode 38-13.

In a fourth clock cycle at time t4, the signals on control lines C4 and C5 may be pulsed high while the signals on control lines C1, C2, C3, and C6 are pulsed low. This activates switches SW16, SW17, SW18, SW19, SW20, SW21, SW22, SW23, SW24, and SW25 to feed voltage V13 from DAC0 to finger electrode 38-13, voltage V14 from DAC2 to finger electrodes 38-14 and 38-18, voltage V15 from DAC3 to finger electrodes 38-15 and 38-19, voltage V16 from DAC4 to finger electrodes 38-16 and 38-20, voltage V17 from DAC5 to finger electrodes 38-17 and 38-21, and voltage V17 from DAC1 to finger electrode 38-17.

In a fifth clock cycle at time t5, the signals on control lines C5 and C6 may be pulsed high while the signals on control lines C1, C2, C3, and C4 are pulsed low. This activates switches SW21, SW22, SW23, SW24, SW25, SW26, SW27, SW28, SW29, and SW30 to feed voltage V17 from DAC1 to finger electrode 38-17, voltage V18 from DAC2 to finger electrodes 38-18 and 38-22, voltage V19 from DAC3 to finger electrodes 38-19 and 38-23, voltage V20 from DAC4 to finger electrodes 38-20 and 38-24, voltage V21 from DAC5 to finger electrodes 38-21 and 38-25, and voltage V21 from DAC0 to finger electrode 38-21.

If digital-to-analog converter circuits 114 provide voltages to more than 25 electrodes 38, then the driving scheme of FIG. 16 may continue until voltages have been provided to all finger electrodes 38. The cycle of FIG. 16 may repeat, looping back to the first group of electrodes 38 after providing voltages to the last group of electrodes 38.

If desired, adjustable lens 22 may include charge cancellation circuitry to offset any undesired charge injection resulting from using analog thin-film transistor switches. Charge cancellation circuitry may, for example, be coupled to the gate of the thin-film transistor that is expected to inject charge. In other arrangements, charge injection may be offset using an adjacent finger electrode.

The following list of "embodiments" is not to be understood as defining the invention, which is solely defined by the claims.

In accordance with an embodiment, an adjustable lens is provided that is configured to be worn in front of a user's eye and includes an electrically modulated optical material interposed between first and second transparent substrates, a common electrode on the first transparent substrate, an array of finger electrodes on the second transparent substrate that adjust a phase profile of the electrically modulated optical material, digital-to-analog converter circuits that provide voltages to the array of finger electrodes, and switching circuitry that couples the digital-to-analog converter circuits to a first group of finger electrodes in the array of finger electrodes during a first clock cycle and that couples the digital-to-analog converter circuits to a second group of finger electrodes during a second clock cycle, where at least one of the finger electrodes is part of the first and second groups and receives the same voltage in the first and second clock cycles.

In accordance with another embodiment, at least two of the digital-to-analog converter circuits are coupled to the second group of finger electrodes during the first clock cycle to pre-charge the second group of finger electrodes.

In accordance with another embodiment, at least some of the digital-to-analog converter circuits are coupled to a third group of finger electrodes in the array of finger electrodes during the first clock cycle to pre-charge the third group of finger electrodes.

In accordance with another embodiment, the switching circuitry includes thin-film transistor switches.

In accordance with another embodiment, the adjustable lens includes a first control line that controls a first group of the thin-film transistor switches and a second control line that controls a second group of the thin-film transistor switches.

In accordance with another embodiment, the first and second control lines are outputs of a shift register.

In accordance with another embodiment, the first group of thin-film transistor switches couples the digital-to-analog converter circuits to the first group of finger electrodes when a first signal on the first control line is pulsed high and decouples the digital-to-analog converter circuits from the first group of finger electrodes when the first signal on the first control line is pulsed low.

In accordance with another embodiment, the second group of thin-film transistor switches couples the digital-to-analog converter circuits to the second group of finger electrodes when a second signal on the second control lines is pulsed high and decouples the digital-to-analog converter circuits from the second group of finger electrodes when the second signal on the second control line is pulsed low.

In accordance with another embodiment, the first signal on the first control line is pulsed high and the second signal on the second control line is pulsed low during the first clock cycle.

In accordance with another embodiment, the second signal on the second control line is pulsed high and the first signal on the first control line is pulsed low during the second clock cycle.

In accordance with another embodiment, the electrically modulated optical material includes liquid crystal material.

In accordance with another embodiment, the first and second transparent substrates include glass.

In accordance with an embodiment, an adjustable lens is provided that includes a stack of liquid crystal cells, in which each liquid crystal cell includes liquid crystal material interposed between first and second substrates, at least one array of transparent conductive electrodes that adjust a phase profile of the liquid crystal material, a first number of digital-to-analog converter circuits that provide voltages to the array of transparent conductive electrodes, and switching circuitry that sequentially couples and decouples the first number of digital-to-analog converter circuits to different groups of transparent conductive electrodes in the array, where with each clock cycle, the switching circuitry advances the digital-to-analog converter circuits from group-to-group by a second number of the transparent conductive electrodes that is less than the first number.

In accordance with another embodiment, at least one of the transparent conductive electrodes is driven at the same voltage for two consecutive clock cycles.

In accordance with another embodiment, the first number is one greater than the second number.

In accordance with another embodiment, the first number is two greater than the second number.

In accordance with another embodiment, the switching circuitry includes thin-film transistor switches.

In accordance with another embodiment, the adjustable lens includes control lines that control the thin-film transistor switches, where the control lines are outputs of a shift register.

In accordance with an embodiment, eyeglasses are provided that include a housing; an adjustable lens in the housing having a liquid crystal cell and an array of electrodes that receive voltages to adjust a phase profile of the liquid crystal cell, where the array of electrodes includes first and second groups of electrodes and where a given one of the electrodes is part of the first and second groups, and digital-to-analog converter circuits that are coupled to the first group of the electrodes and decoupled from the second group of electrodes during a first clock cycle and that are coupled to the second group of electrodes and decoupled from the first group of electrodes during a second clock cycle, where the given one of the electrodes is driven at the same voltage during the first and second clock cycles.

In accordance with another embodiment, the given one of the electrodes is interposed between the rest of the electrodes in the first group and the rest of the electrodes in the second group.

In accordance with another embodiment, the eyeglasses include a first group of switches that couples the digital-to-analog converter circuits from the first group of electrodes and a second group of switches that couples the digital-to-analog converter circuits to the second group of electrodes.

In accordance with another embodiment, the eyeglasses include a first control line that controls the first group of switches and a second control line that controls the second group of switches, where the first and second control lines are outputs of a shift register.

The foregoing is merely illustrative and various modifications can be made to the described embodiments. The foregoing embodiments may be implemented individually or in any combination.

## Claims

1. An adjustable lens, comprising:
an electrically modulated optical material interposed between first and second transparent substrates;
a common electrode on the first transparent substrate;
an array of finger electrodes on the second transparent substrate that adjust a phase profile of the electrically modulated optical material;
digital-to-analog converter circuits that provide voltages to the array of finger electrodes; and
switching circuitry that couples the digital-to-analog converter circuits to a first group of finger electrodes in the array of finger electrodes during a first clock cycle and that couples the digital-to-analog converter circuits to a second group of finger electrodes during a second clock cycle, wherein at least one of the finger electrodes is part of the first and second groups and the circuitry is configured such that the at least one of the finger electrodes receives the same voltage in the first and second clock cycles.

2. The adjustable lens defined in claim 1 wherein at least two of the digital-to-analog converter circuits are coupled to the second group of finger electrodes during the first clock cycle to pre-charge the second group of finger electrodes.

3. The adjustable lens defined in claim 1 wherein at least some of the digital-to-analog converter circuits are coupled to a third group of finger electrodes in the array of finger electrodes during the first clock cycle to pre-charge the third group of finger electrodes.

4. The adjustable lens defined in claim 1 wherein the switching circuitry comprises thin-film transistor switches.

5. The adjustable lens defined in claim 4 further comprising a first control line that controls a first group of the thin-film transistor switches and a second control line that controls a second group of the thin-film transistor switches.

6. The adjustable lens defined in claim 5 wherein the first and second control lines are outputs of a shift register.

7. The adjustable lens defined in claim 5 wherein the first group of thin-film transistor switches couples the digital-to-analog converter circuits to the first group of finger electrodes when a first signal on the first control line is pulsed high and decouples the digital-to-analog converter circuits from the first group of finger electrodes when the first signal on the first control line is pulsed low.

8. The adjustable lens defined in claim 7 wherein the second group of thin-film transistor switches couples the digital-to-analog converter circuits to the second group of finger electrodes when a second signal on the second control lines is pulsed high and decouples the digital-to-analog converter circuits from the second group of finger electrodes when the second signal on the second control line is pulsed low.

9. The adjustable lens defined in claim 8 wherein the first signal on the first control line is pulsed high and the second signal on the second control line is pulsed low during the first clock cycle.

10. The adjustable lens defined in claim 9 wherein the second signal on the second control line is pulsed high and the first signal on the first control line is pulsed low during the second clock cycle.

11. The adjustable lens defined in claim 1 wherein the electrically modulated optical material comprises liquid crystal material.

12. The adjustable lens defined in claim 1 wherein the first and second transparent substrates comprise glass.

## Patentansprüche

1. Einstellbare Linse, umfassend:
ein elektrisch moduliertes optisches Material, das zwischen einem ersten und einem zweiten transparenten Substrat angeordnet ist;
eine gemeinsame Elektrode auf dem ersten transparenten Substrat;
eine Anordnung von Fingerelektroden auf dem zweiten transparenten Substrat, die ein Phasenprofil des elektrisch modulierten optischen Materials einstellen;
Digital-Analog-Wandlerschaltungen, die Spannungen an die Anordnung von Fingerelektroden bereitstellen; und
Schaltlogik, die die Digital-Analog-Wandlerschaltungen mit einer ersten Gruppe von Fingerelektroden in der Anordnung von Fingerelektroden während eines ersten Taktzyklus koppelt und die die Digital-Analog-Wandlerschaltungen während eines zweiten Taktzyklus mit einer zweiten Gruppe von Fingerelektroden koppelt, wobei mindestens eine der Fingerelektroden Teil der ersten und zweiten Gruppe ist und die Schaltlogik derart konfiguriert ist, dass die mindestens eine der Fingerelektroden die gleiche Spannung in dem ersten und dem zweiten Taktzyklus empfängt.

2. Einstellbare Linse nach Anspruch 1, wobei mindestens zwei der Digital-Analog-Wandlerschaltungen während des ersten Taktzyklus mit der zweiten Gruppe von Fingerelektroden gekoppelt sind, um die zweite Gruppe von Fingerelektroden vorzuladen.

3. Einstellbare Linse nach Anspruch 1, wobei mindestens einige der Digital-Analog-Wandlerschaltungen während des ersten Taktzyklus mit einer dritten Gruppe von Fingerelektroden in der Anordnung von Fingerelektroden gekoppelt sind, um die dritte Gruppe von Fingerelektroden vorzuladen.

4. Einstellbare Linse nach Anspruch 1, wobei die Schaltschaltlogik Dünnfilmtransistorschalter umfasst.

5. Einstellbare Linse nach Anspruch 4, ferner umfassend eine erste Steuerleitung, die eine erste Gruppe der Dünnfilmtransistorschalter steuert, und eine zweite Steuerleitung, die eine zweite Gruppe der Dünnfilmtransistorschalter steuert.

6. Einstellbare Linse nach Anspruch 5, wobei die erste und die zweite Steuerleitung Ausgänge eines Schieberegisters sind.

7. Einstellbare Linse nach Anspruch 5, wobei die erste Gruppe von Dünnfilmtransistorschaltern die Digital-Analog-Wandlerschaltungen mit der ersten Gruppe von Fingerelektroden koppelt, wenn ein erstes Signal auf der ersten Steuerleitung hoch gepulst ist, und die Digital-Analog-Wandlerschaltungen von der ersten Gruppe von Fingerelektroden entkoppelt, wenn das erste Signal auf der ersten Steuerleitung niedrig gepulst ist.

8. Einstellbare Linse nach Anspruch 7, wobei die zweite Gruppe von Dünnfilmtransistorschaltern die Digital-Analog-Wandlerschaltungen mit der zweiten Gruppe von Fingerelektroden koppelt, wenn ein zweites Signal auf der zweiten Steuerleitung hoch gepulst ist, und die Digital-Analog-Wandlerschaltungen von der zweiten Gruppe von Fingerelektroden entkoppelt, wenn das zweite Signal auf der zweiten Steuerleitung niedrig gepulst ist.

9. Einstellbare Linse nach Anspruch 8, wobei das erste Signal auf der ersten Steuerleitung hoch gepulst ist und das zweite Signal auf der zweiten Steuerleitung während des ersten Taktzyklus niedrig gepulst ist.

10. Einstellbare Linse nach Anspruch 9, wobei das zweite Signal auf der zweiten Steuerleitung hoch gepulst ist und das erste Signal auf der ersten Steuerleitung während des zweiten Taktzyklus niedrig gepulst ist.

11. Einstellbare Linse nach Anspruch 1, wobei das elektrisch modulierte optische Material Flüssigkristallmaterial umfasst.

12. Einstellbare Linse nach Anspruch 1, wobei das erste und das zweite transparente Substrat Glas umfassen.

## Revendications

1. Lentille réglable, comprenant :
un matériau optique modulé électriquement interposé entre des premier et second substrats transparents ;
une électrode commune sur le premier substrat transparent ;
un réseau d'électrodes de doigt sur le second substrat transparent qui règle un profil de phase du matériau optique modulé électriquement ;
des circuits de conversion numérique en analogique qui fournissent des tensions au réseau d'électrodes de doigt, et
un circuit de commutation qui couple les circuits de conversion numérique en analogique à un premier groupe d'électrodes de doigt dans le réseau d'électrodes de doigt pendant un premier cycle d'horloge et qui couple les circuits de conversion numérique en analogique à un deuxième groupe d'électrodes de doigt pendant un second cycle d'horloge, dans laquelle au moins l'une des électrodes de doigt fait partie des premier et deuxième groupes et le circuit est configuré de telle sorte que l'au moins une des électrodes de doigt reçoit la même tension dans les premier et second cycles d'horloge.

2. Lentille réglable selon la revendication 1, dans laquelle au moins deux des circuits de conversion numérique en analogique sont couplés au deuxième groupe d'électrodes de doigt pendant le premier cycle d'horloge pour précharger le deuxième groupe d'électrodes de doigt.

3. Lentille réglable selon la revendication 1, dans laquelle au moins certains parmi les circuits de conversion numérique en analogique sont couplés à un troisième groupe d'électrodes de doigt dans le réseau d'électrodes de doigt pendant le premier cycle d'horloge pour précharger le troisième groupe d'électrodes de doigt.

4. Lentille réglable selon la revendication 1, dans laquelle le circuit de commutation comprend des commutateurs à transistor à couches minces.

5. Lentille réglable selon la revendication 4, comprenant en outre une première ligne de commande qui commande un premier groupe des commutateurs à transistor à couches minces et une seconde ligne de commande qui commande un deuxième groupe des commutateurs à transistor à couches minces.

6. Lentille réglable selon la revendication 5, dans laquelle les première et seconde lignes de commande sont des sorties d'un registre à décalage.

7. Lentille réglable selon la revendication 5, dans laquelle le premier groupe de commutateurs à transistor à couches minces couple les circuits de conversion numérique en analogique au premier groupe d'électrodes de doigt lorsqu'un premier signal sur la première ligne de commande est pulsé à l'état haut et découple les circuits de conversion numérique en analogique du premier groupe d'électrodes de doigt lorsque le premier signal sur la première ligne de commande est pulsé à l'état bas.

8. Lentille réglable selon la revendication 7, dans laquelle le deuxième groupe de commutateurs à transistor à couches minces couple les circuits de conversion numérique en analogique au deuxième groupe d'électrodes de doigt lorsqu'un second signal sur les secondes lignes de commande est pulsé à l'état haut et découple les circuits de conversion numérique en analogique du deuxième groupe d'électrodes de doigt lorsque le second signal sur la seconde ligne de commande est pulsé à l'état bas.

9. Lentille réglable selon la revendication 8, dans laquelle le premier signal sur la première ligne de commande est pulsé à l'état haut et le second signal sur la seconde ligne de commande est pulsé à l'état bas pendant le premier cycle d'horloge.

10. Lentille réglable selon la revendication 9, dans laquelle le second signal sur la seconde ligne de commande est pulsé à l'état haut et le premier signal sur la première ligne de commande est pulsé à l'état bas pendant le second cycle d'horloge.

11. Lentille réglable selon la revendication 1, dans laquelle le matériau optique modulé électriquement comprend un matériau à cristaux liquides.

12. Lentille réglable selon la revendication 1, dans laquelle les premier et second substrats transparents comprennent du verre.
